# EUROPEAN PATENT APPLICATION

(11) **EP 4 811 220 A1**
(43) Date of publication of application: **23.09.2026**
(21) Application number: 26164489.2
(22) Date of filing: 13.03.2026
(51) Int. Cl.: G06N 3/0985, G06N 20/00, G06N 20/20

(54) **METHOD AND SYSTEM FOR DYNAMIC SELECTION OF MACHINE LEARNING MODELS**

(30) Priority: 21.03.2025 IN 202521026018
(71) Applicant: Tata Consultancy Services Limited, Maharashtra (IN)
(72) Inventor: BASAK, Anirban, 700160 Kolkata, West Bengal (IN); PAUL, Pranabesh, 700156 Kolkata, West Bengal (IN); ROY, Krishnendu, New Jersey, 08837 (US)
(74) Representative: Goddar, Heinz J.

(57) **Abstract**

Conventionally, applications using machine learning models apply same models throughout the working of the application but there is a need to select and switch to appropriate models based on the input data for providing better results. Hence, embodiments of present disclosure provide a method and system for dynamic selection of machine learning models. The method receives input data, extracts features from it and derives a set of parameters from the features. Then, a model fit vector is generated as a weighted combination of the set of parameters. The weights are determined using an entropy-SHAP hybrid technique and further fine-tuned based on a fairness metric. Next, machine learning models are trained using the parameters having weights greater than a threshold value and a model score is calculated for each of the models. Best model is selected based on the model score.

## Description

### CROSS-REFERENCE TO RELATED APPLICATIONS AND PRIORITY

The present application claims priority from Indian application no. 202521026018, filed on March 21, 2025.

### TECHNICAL FIELD

The present invention generally relates to the field of machine learning, and, more particularly, to a method and system for dynamic selection of machine learning models.

### BACKGROUND

In recent times, machine learning models are being used extensively for various applications in domains such as financial services, healthcare, telecommunication and so on. Each application may involve multiple machine learning models for different features and different set of users. For example, in financial service systems, the machine learning models may be used for risk assessment, fraud detection etc. Traditional systems apply or use same set of models throughout the working of the applications. However, it is necessary to select appropriate machine learning models based on input data to the application, for example, customer behavior and preferences, current market trends etc. In order to do so, appropriate features need to be extracted from the input data and important features have to be selected for model training. SHAP (SHapley Additive exPlanations) is one of the popular techniques used to analyze importance of features. However, conventional SHAP technique has several drawbacks. SHAP quantifies feature contributions to predictions (ϕ*ᵢ*) based solely on their marginal impact, lacking insight into their informational value or uncertainty about the target variable. Exact SHAP computation scales exponentially with the number of features (*O*(2*^{M}*))*,* making it impractical for high-dimensional datasets. Even approximations (e.g., Kernel SHAP) are slow and resource intensive. Traditional SHAP struggles with correlated features, often distributing importance evenly among them, which obscures true drivers and complicates interpretation. Also, SHAP does not inherently account for fairness, potentially assigning high importance to biased features (e.g., those correlated with sensitive attributes like race or gender), perpetuating unfair outcomes. SHAP-based interpretations can lead to unstable model decisions when small input changes flip predictions, especially near decision boundaries, due to its focus on static contributions without dynamic thresholding. SHAP excels at local (instance-level) explanations but may miss global patterns or interactions critical for model-wide understanding, especially in high-stakes domains. SHAP's computational cost and static nature make it challenging for real-time systems requiring fast, adaptive explanations (e.g., IoT anomaly detection).

### SUMMARY

Embodiments of the present disclosure present technological improvements as solutions to one or more of the above-mentioned technical problems recognized by the inventors in conventional systems. For example, in one embodiment, a method for dynamic selection of machine learning models is provided. The method includes receiving input data from one or more sources, extracting a plurality of features from the input data and deriving a plurality of parameters based on the plurality of features, wherein the plurality of features and the plurality of parameters comprise a profile vector. Further, the method includes generating a model fit vector comprising the plurality of parameters and associated plurality of weights by first initializing the plurality of weights associated with the plurality of parameters based on an entropy of one or more features, from among the plurality of features, that are used to derive the plurality of parameters and updating the plurality of weights associated with the plurality of parameters using SHAP (SHapley Additive exPlanations) values. Next, calculating a fairness metric for each of the plurality of parameters, determining one or more parameters that introduce bias based on the fairness metric, from among the plurality of parameters and reducing the plurality of weights associated with the one or more parameters that introduce bias. The method further includes training a plurality of machine learning models using the plurality of parameters having an associated weight greater than a first predefined threshold and determining a model score associated with each of the plurality of machine learning models as a weighted combination of a base score, a performance score, an adaptability score, an accuracy score, and a fairness score. The base score is a cosine similarity between the profile vector and the model fit vector. The performance score is a historical accuracy of the trained machine learning model. The adaptability score is a model adaptation rate, wherein the accuracy score is a current accuracy of the trained machine learning model. The fairness score represents bias of the trained machine learning model. Furthermore, the method includes selecting one or more models from among the plurality of trained machine learning models having the associated model score greater than a second predefined threshold.

In another aspect, a system for dynamic selection of machine learning models is provided. The system includes: a memory storing instructions; one or more communication interfaces; and one or more hardware processors coupled to the memory via the one or more communication interfaces, wherein the one or more hardware processors are configured by the instructions to receive input data from one or more sources, extract a plurality of features from the input data and derive a plurality of parameters based on the plurality of features, wherein the plurality of features and the plurality of parameters comprise a profile vector. Further, the one or more hardware processors are configured by the instructions to generate a model fit vector comprising the plurality of parameters and associated plurality of weights by first initializing the plurality of weights associated with the plurality of parameters based on an entropy of one or more features, from among the plurality of features, that are used to derive the plurality of parameters and updating the plurality of weights associated with the plurality of parameters using SHAP (SHapley Additive exPlanations) values. Next, calculating a fairness metric for each of the plurality of parameters, determining one or more parameters that introduce bias based on the fairness metric, from among the plurality of parameters and reducing the plurality of weights associated with the one or more parameters that introduce bias. The one or more hardware processors are further configured to train a plurality of machine learning models using the plurality of parameters having an associated weight greater than a first predefined threshold and determining a model score associated with each of the plurality of machine learning models as a weighted combination of a base score, a performance score, an adaptability score, an accuracy score, and a fairness score. The base score is a cosine similarity between the profile vector and the model fit vector. The performance score is a historical accuracy of the trained machine learning model. The adaptability score is a model adaptation rate, wherein the accuracy score is a current accuracy of the trained machine learning model. The fairness score represents bias of the trained machine learning model. Furthermore, the one or more hardware processors are configured by the instructions to select one or more models from among the plurality of trained machine learning models having the associated model score greater than a second predefined threshold.

In yet another aspect, there are provided one or more non-transitory machine-readable information storage mediums comprising one or more instructions which when executed by one or more hardware processors cause a method for dynamic selection of machine learning models. The method includes receiving input data from one or more sources, extracting a plurality of features from the input data and deriving a plurality of parameters based on the plurality of features, wherein the plurality of features and the plurality of parameters comprise a profile vector. Further, the method includes generating a model fit vector comprising the plurality of parameters and associated plurality of weights by first initializing the plurality of weights associated with the plurality of parameters based on an entropy of one or more features, from among the plurality of features, that are used to derive the plurality of parameters and updating the plurality of weights associated with the plurality of parameters using SHAP (SHapley Additive exPlanations) values. Next, calculating a fairness metric for each of the plurality of parameters, determining one or more parameters that introduce bias based on the fairness metric, from among the plurality of parameters and reducing the plurality of weights associated with the one or more parameters that introduce bias. The method further includes training a plurality of machine learning models using the plurality of parameters having an associated weight greater than a first predefined threshold and determining a model score associated with each of the plurality of machine learning models as a weighted combination of a base score, a performance score, an adaptability score, an accuracy score, and a fairness score. The base score is a cosine similarity between the profile vector and the model fit vector. The performance score is a historical accuracy of the trained machine learning model. The adaptability score is a model adaptation rate, wherein the accuracy score is a current accuracy of the trained machine learning model. The fairness score represents bias of the trained machine learning model. Furthermore, the method includes selecting one or more models from among the plurality of trained machine learning models having the associated model score greater than a second predefined threshold.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 illustrates an exemplary block diagram of a system for dynamic selection of machine learning models, according to some embodiments of the present disclosure.
FIG. 2 is a flow diagram illustrating a method for dynamic selection of machine learning models, using the system of FIG. 1, according to some embodiments of the present disclosure.
FIG. 3 is a flow diagram illustrating a process of generating a model fit vector, using the system of FIG. 1, according to some embodiments of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Conventionally, applications using machine learning models apply same models throughout the working of the application but there is a need to select and switch to appropriate models based on the input data for providing better results. Hence, embodiments of present disclosure provide a method and system for dynamic selection of machine learning models. The method receives input data, extracts features from it and derives a set of parameters from the features. Then, a model fit vector is generated as a weighted combination of the set of parameters. The weights are determined using an entropy-SHAP hybrid technique and further fine-tuned based on a fairness metric. Next, machine learning models are trained using the parameters having weights greater than a threshold value and a model score is calculated for each of the models. Best model is selected based on the model score. Since the models are selected based on the input data, they are most suited for the application and provide personalized experience to an end user. Further, the models can be easily adapted to new data in real-time. Model training is optimized due to right selection of parameters based on a combination of entropy, SHAP and fairness metric. Incorporating entropy to adjust SHAP values highlights features that reduce uncertainty, providing a richer, context-aware interpretation beyond raw predictive power. Further, integrating fairness metrics to penalize features contributing to bias ensures equitable predictions while retaining accuracy. While adding entropy calculations increases initial overhead, the entropy-SHAP hybrid technique can prioritize a subset of high-information features, reducing the dimensionality for subsequent SHAP computations. Efficient entropy approximations (e.g., histogram-based) further mitigate this. Entropy-based adjustments differentiate correlated features by their unique information content. A feature with higher entropy gets a boosted weight, clarifying its distinct role despite correlations. Entropy component provides a global informational perspective, while fairness scoring ensures global equity constraints are met, balancing local and global interpretability. Further, the models retrained on new input data are switched based on hysteresis thresholding. Hysteresis introduces dual thresholds (e.g., activate at 70%, deactivate at 50%) to stabilize predictions. This reduces toggling in model output, ensuring robust decision-making in real-time applications like IoT or telecom. Hysteresis stabilizes decisions over time, reducing the need for re-computation, while precomputed entropy-SHAP weights (adjusted for fairness) can be cached and applied efficiently in streaming data scenarios.

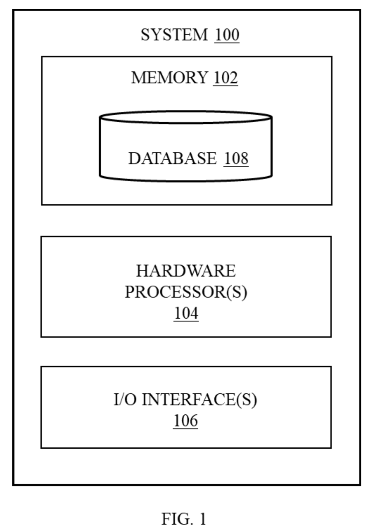

Referring now to the drawings, and more particularly to FIGS. 1 to 3, where similar reference characters denote corresponding features consistently throughout the figures, there are shown preferred embodiments, and these embodiments are described in the context of the following exemplary system and/or method.

FIG. 1 illustrates an exemplary block diagram of a system for dynamic selection of machine learning models, according to some embodiments of the present disclosure. In an embodiment, the system 100 includes one or more processors 104, communication interface device(s) 106 or Input/Output (I/O) interface(s) 106 or user interface 106, and one or more data storage devices or memory 102 operatively coupled to the one or more processors 104. The one or more processors 104 that are hardware processors can be implemented as one or more microprocessors, microcomputers, microcontrollers, digital signal processors, central processing units, state machines, logic circuitries, and/or any devices that manipulate signals based on operational instructions. Among other capabilities, the processor(s) is configured to fetch and execute computer-readable instructions stored in the memory. In an embodiment, the system 100 can be implemented in a variety of computing systems, such as laptop computers, notebooks, hand-held devices, workstations, mainframe computers, servers, a network cloud, and the like.

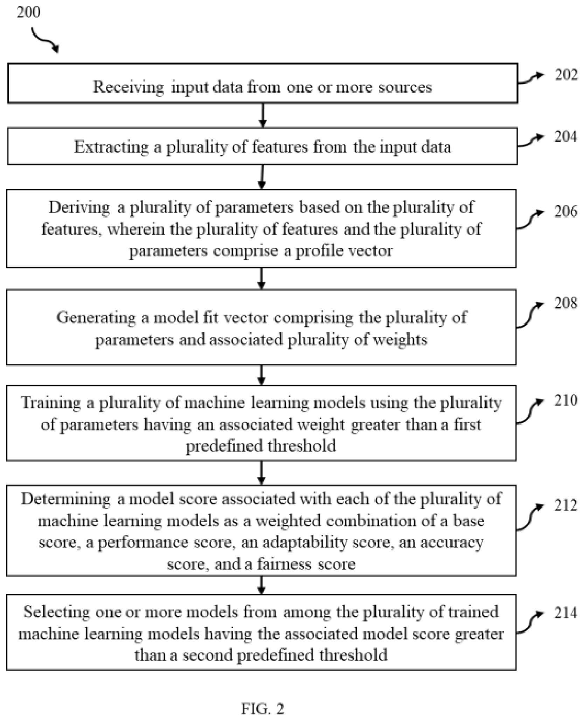

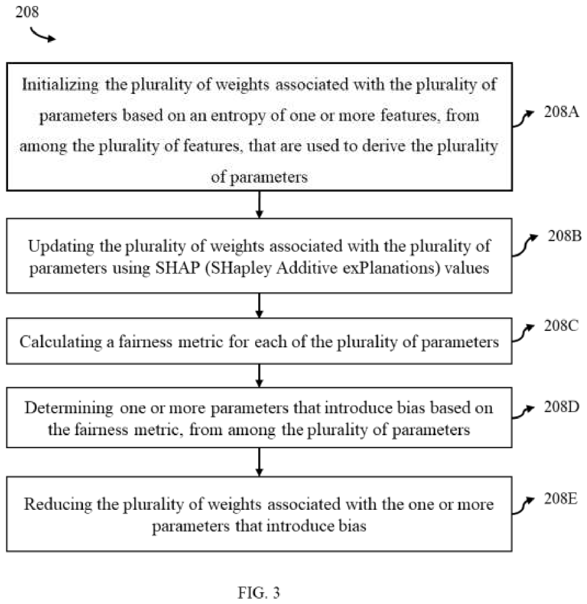

The I/O interface device(s) 106 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. The memory 102 may include any computer-readable medium known in the art including, for example, volatile memory, such as Static Random-Access Memory (SRAM) and Dynamic Random-Access Memory (DRAM), and/or non-volatile memory, such as read only memory (ROM), erasable programmable ROM, flash memories, hard disks, optical disks, and magnetic tapes. The database 108 stores information pertaining to inputs fed to the system 100 and/or outputs generated by the system (e.g., at each stage), specific to the methodology described herein. Functions of the components of system 100 are explained in conjunction with flow diagrams of FIGS. 2 and 3, for dynamic selection of machine learning models.

In an embodiment, the system 100 comprises one or more data storage devices or the memory 102 operatively coupled to the processor(s) 104 and is configured to store instructions for execution of steps of the method 200 depicted in FIG. 2 by the processor(s) or one or more hardware processors 104. The steps of the method of the present disclosure will now be explained with reference to the components or blocks of the system 100 as depicted in FIG. 1, and the flow diagrams of FIGS. 2 and 3 for dynamic selection of machine learning models. Although process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any order practical. Further, some steps may be performed simultaneously.

FIG. 2 is a flow diagram illustrating a method 200 for dynamic selection of machine learning models, according to some embodiments of the present disclosure. At step 202 of the method 200, the one or more hardware processors 104 are configured to receive input data from one or more sources. The input data varies depending on the domain where method 200 is applied. For example, in financial services domain, the input data is received from one or more sources such as transaction records, application usage data, credit information, market data, external risk databases and the like.

The transaction records comprise data related to i) transaction details such as timestamp, location, amount, currency, merchant, ii) payment method such as card details, digital wallet, bank transfers, iii) transaction status such as initial, processing, completed, failed, iv) classification systems such as category labels, risk levels. For example, suppose a customer makes a purchase of $500 at a retail store using a credit card. Then, input data received for this transaction are: [Timestamp: 2025-01-29 14:30:00, Location: New York, NY, Amount: $500, Currency: USD, Merchant: Retail Store XYZ, Payment Method: Credit Card (ending in 1234), Transaction Status: Completed].

Application usage data monitors customer interaction with digital services such as internet banking, mobile banking etc. The input data relates to i) session metrics such as login frequency, duration, feature utilization, ii) behavioral indicators such as navigation paths, preferences, iii) technical data such as device information, error logs. For example, suppose a customer logs into the mobile application, checks their portfolio, and logs out after 10 minutes. Then, input data received comprises: [Login Time: 2025-01-29 15:00:00, Duration: 10 minutes, Features Used: Portfolio View, Device: iPhone 14, iOS 18]. Each session may be represented as [*t_{login}, t_{logout}, f*₁, *f*₂*, ... , fₙ, d*]*,* where *t_{login}* is login timestamp, *t_{logout}* is logout timestamp, *fₖ* is application feature used during the session, and *d* is device information.

Credit information includes credit profile data of customers. It includes data related to i) traditional scores such as credit bureau ratings, internal scoring, and ii) historical data such as payment history, credit utilization. For example, if a customer's credit score changes from 720 to 740 after paying off a loan, then, the input data received is: [Credit Score: 740, Payment History: On-time payments for the last 12 months, Credit Utilization: 30%]. Credit profile *Cₖ* of a customer may be mathematically represented as *Cₖ* = [*csₖ, phₖ, cuₖ*]*,* where *csₖ* is a credit score, *phₖ* represents payment history which is a binary vector indicating on-time/late payments, and *cuₖ* represents credit utilization ratio.

Market data provides real-time financial market information such as price data (stocks, bonds, currencies), and market indicators (volatility indices, trading volumes). External risk databases integrates third-party risk data such as watch lists (sanctions, PEP lists), and industry data (fraud reports, security alerts).

Once the input data is received, it may be preprocessed before step 204. Pre-processing involves unifying input data from various sources and encrypting the input data to ensure regulatory compliance and data protection. For example, the transaction data, app usage data, and credit information are combined into a unified customer profile and anonymized using AES-256-GCM (Advanced Encryption Standard with Galois Counter Mode) encryption. Further, at step 204 of the method 200, the one or more hardware processors 104 are configured to extract a plurality of features from the pre-processed input data. The plurality of features, alternately referred to as variables or attributes, represent characteristic of input data. Depending on the type of input data, conventional feature engineering techniques such as scaling, encoding, imputation etc., may be applied to extract the plurality of features. The feature engineering techniques can vary from use case to use. Techniques like feature interaction creation can be used for Fintech. Similarly, dimensionality reduction with information preservation can be used in IoT use cases.

Further, at step 206 of the method 200, the one or more hardware processors 104 are configured to derive a plurality of parameters based on the plurality of features. The plurality of parameters, alternatively referred to as derived features, are application-specific and derived based on requirement. For example, a parameter "average transaction amount over the last 30 days" may be extracted from a feature 'transaction amount' by averaging amount involved in transactions that had occurred over a period of 30 days. Few other examples of the plurality of parameters in financial services domain include a transaction frequency which measures how many times a transaction has occurred in a specific period of time, a risk score, an investment coefficient, spending volatility etc. These parameters are derived from one or more features extracted at the step 204. The plurality of features and the plurality of parameters comprise a profile vector.

Further, at step 208 of the method 200, the one or more hardware processors 104 are configured to generate a model fit vector comprising the plurality of parameters and associated plurality of weights. The model fit vector represents an optimal feature importance distribution for a machine learning model. FIG. 3 is a flow diagram illustrating a process of generating the model fit vector, according to some embodiments of the present disclosure. At step 208A, the plurality of weights associated with the plurality of parameters are initialized based on an entropy of one or more features, from among the plurality of features, that are used to derive the plurality of parameters. Entropy measures uncertainty in the input data, helping the system 100 identify features with the most variability. The entropy of each feature *xᵢ* is calculated according to equation 1, where *p*(*xᵢₖ*) is probability of feature *xᵢ* taking a value *k.* For example, if transaction frequency (*T*) has high variability across users, then, it has high entropy. Features with high entropy are prioritized because they provide more meaningful information. In an embodiment, step 208A is carried out by normalizing numerical and categorical features, estimating probability distribution for all the features, compute entropy according to equation 1 and assign higher weights to features with higher entropy. $Entropy \left({x}_{i}\right) = - Σ p \left({x}_{ik}\right) logp \left({x}_{ik}\right)$

Next, at step 208B, the plurality of weights associated with the plurality of parameters are updated using SHAP (SHapley Additive exPlanations) values. SHAP is a state of the art technique to measure how much each feature contributes to a machine learning model's prediction. SHAP values are determined by using Python packages. Then the plurality of weights are updated according to equation 2, where *η* is a learning rate, *ΔAccuracy* is change in accuracy after using feature *xᵢ*, and *SHAP*(*xᵢ*) is SHAP value for the feature *xᵢ*. ${w}_{i}^{adjusted} = {w}_{{i}_{old}} + η ⋅ SHAP \left({x}_{i}\right) ⋅ ΔAccuracy$

Further, at step 208C, a fairness metric is calculated for each of the plurality of parameters. The fairness metric is a quantitative measure used to assess whether a machine learning model is making predictions equally well across different groups of data, ensuring that no specific demographic group is unfairly favored or disadvantaged by the model's decisions, effectively identifying and quantifying potential bias within the model. Any conventional metrics such as Statistical Parity Difference (SPD) may be used to calculate the fairness metric. Then, at step 208D, one or more parameters that introduce bias are determined based on the fairness metric, from among the plurality of parameters. This is done by analyzing their relationship with sensitive attributes and their impact on the fairness metric. This process leverages statistical methods and model interpretability to pinpoint features that disproportionately affect outcomes across protected groups (e.g., gender, race). At step 208E, the plurality of weights associated with the one or more parameters that introduce bias are reduced. The plurality of weights are scaled down proportionally to the feature's bias contribution (as given by equation 3), ensuring fairness without eliminating its predictive utility entirely. In equation 3, ${w}_{i}^{adjusted}$ is weight determined at step 208B, ${Bias}_{i}^{norm}$ is normalized bias score, *β* is a fairness penalty parameter controlling strength of reduction (typically 0.3-0.7), and ${w}_{i}^{final}$ is final adjusted weight. ${w}_{i}^{final} = {w}_{i}^{adjusted} ∗ \left(1-β∗{Bias}_{i}^{norm}\right)$

Once the model fit vector is generated, at step 210, the one or more hardware processors 104 are configured to train a plurality of machine learning models using the plurality of parameters having an associated weight greater than a first predefined threshold. The plurality of machine learning models are trained for specific applications related to the domain in which method 200 is applied. For example, in financial services domain, the plurality of machine learning models may be behavioral models which analyze daily transaction patterns or high-frequency trader model, fraud detection models, risk models for monitoring the transactions and identify risk and so on. In an embodiment, steps 208C and 208D are performed again after the plurality of machine learning models are trained to ensure that the trained models are not biased. The models may be retrained after adjusting weights of parameters based on the fairness metric to mitigate the bias.

Once the plurality of machine learning models are trained, at step 212, the one or more hardware processors 104 are configured to determine a model score associated with each of the plurality of machine learning models as a weighted combination of i) a base score, ii) a performance score, iii) an adaptability score, iv) an accuracy score, and v) a fairness score.
i) The base score is a cosine similarity between the profile vector and the model fit vector.
ii) The performance score is a historical accuracy of the trained machine learning model.
iii) The adaptability score is a model adaptation rate. The model adaptation rate (*AS*) measures how quickly a model adjusts to changing input data and is calculated by equation 4. $AS = α ∗ ΔS + β ∗ D \left(X\right) + γ ∗ ΔPerformance$ In equation 4, *ΔS* is similarity change, *D*(*X*) is feature drift, and *ΔPerformance* is accuracy decay. Cosine similarity between the profile vector and the model fit vector is tracked over time. Similarity change *ΔS* is a difference between cosine similarity at current timestep and cosine similarity at a previous time step. If the similarity decreases significantly the model may need retraining or replacement. Feature drift *D*(*X*) indicates changes in feature distributions and is calculated as a difference of entropy of the feature at the current time step and entropy at the previous timestep. Higher drift increases the need for model adaptation. *ΔPerformance* is measured by change in performance measures (such as precision, recall or F1-score) of the model over a period of time.
iv) The accuracy score is a current accuracy of the trained machine learning model.
v) The fairness score represents bias of the trained machine learning model. It can be calculated using conventional techniques such as SPD.

Once model scores are determined for the plurality of machine learning models, at step 214, the one or more hardware processors are configured to select one or more models from among the plurality of trained machine learning models having the associated model score greater than a second predefined threshold. Suppose multiple models have model score exceeding the second predefined threshold value, then, one among them can be chosen using multiple ways. One way is by assigning a fixed priority order to models based on the criticality or impact (most preferred way to handle the conflict as computationally less intensive and can handle real-time scenarios). Another way is severity based activation wherein the system measures how far each metric exceeds its threshold and activates the model with the most severe violation. Alternately, predictions from selected models may be blended using the weighted averages based on Entropy-SHAP weights. Yet another way is to use a state machine to determine the active model based on the current system state or recent history.

When new input data is received, the one or more hardware processors 104 are configured to retrain the plurality of machine learning models to obtain a plurality of retrained machine learning models. Model scores are calculated for the plurality of retrained machine learning models. Then, the one or more hardware processors 104 are configured to select one or more retrained models from among the plurality of retrained machine learning models based on associated model score. Finally, one or more hardware processors 104 are configured to switch to one or more retrained models from the one or more models selected previously using a hysteresis based thresholding technique. Hysteresis prevents frequent, unnecessary model switching by ensuring a new retrained model is selected only if it significantly outperforms the current one. Equation 5 gives the condition for model switching, where *τ* is a stability threshold. This prevents instability and ensures switching occurs only when a meaningful performance improvement is detected. $Score \left({M}_{new}\right) > Score \left({M}_{current}\right) + τ$

If the models were switched every time there is a minor accuracy improvement, it could lead to instability and inefficiency. Hysteresis introduces a stability buffer (*τ*), ensuring a model is replaced only if the performance gain is significant. In another embodiment, hysteresis based thresholding may be implemented based on the input data to select appropriate model among the plurality of trained machine learning models. For example, suppose one model predicts optimal bandwidth distribution in a telecommunication network and another model balances server load to prevent outages. Suppose hysteresis threshold defined for the first model is active if data demand > 20 GB/month, off < 15 GB/month and for the second model is active if server load > 80%, off < 60%. If at any point in time, server load is 85%, then, the second model is selected. If the load drops to 70% then the second model is continued until the server load < 60%, then switches to the first model.

### USE CASE APPLICATIONS

The method 200 can be applied to various domains for selecting appropriate Machine Learning (ML) models. In healthcare domain, ML models can be used for patient diagnosis and treatment recommendations. Input data is received from patient health records from which key features such as blood pressure, cholesterol levels, genetic markers are identified. The key features both predict health outcomes (e.g., heart disease risk) and reduce diagnostic uncertainty. For instance, a feature like "family history" might have moderate predictive power but high entropy reduction, indicating its importance in understanding risk patterns. Thus, the entropy-SHAP hybrid technique accordingly assigns weightage to these features. Adjusting these weights based on fairness metric ensures predictions aren't biased against demographic groups (e.g., gender, race, socioeconomic status). For example, adjust feature weights if 'income level' disproportionately affects treatment recommendations for lower-income patients. For example, suppose the aim is to predict diabetes risk, features extracted from input data are blood glucose, age, ethnicity, gender and parameter derived is Body Mass Index (BMI). A machine learning model identifies "blood glucose" as highly predictive and informative (high entropy reduction), and adjusts for fairness to avoid bias against ethnic minorities or gender (e.g., ensuring ethnicity or gender isn't over-weighted). The benefits of selecting such a model using method 200 is that it reduces misdiagnosis, ensures equitable care, and stabilizes clinical decisions.

In telecommunications, machine learning is used for network optimization, customer churn prediction, fraud detection, service personalization etc. The method 200 can enhance these applications by balancing predictive accuracy, fairness, and operational stability. One of the applications is network resource allocation to optimize bandwidth or signal allocation based on predicted demand. The entropy-SHAP hybrid technique highlights features like historical bandwidth usage, time of day, or device type that predict demand and reduce uncertainty about network load. 'Historical usage' might dominate entropy reduction, showing its reliability for planning. Fairness metric based weighting prevents biased allocation (e.g., favoring premium subscribers over basic plan users). The method 200 adjusts weights if "plan type" unfairly skews bandwidth toward high-paying customers. For example, to allocate bandwidth during peak hours, parameters such as usage history, time of day, plan type, location etc. are determined. The model emphasizes "usage history," ensures fairness across plan types, and uses hysteresis for steady network adjustments. This enhances network efficiency, ensures equitable service quality, and minimizes operational disruptions.

In IoT, machine learning drives applications like predictive maintenance, anomaly detection, smart home automation, and energy management. The method 200 can optimize these systems by ensuring interpretable, fair, and stable decisions amid vast sensor data and diverse user interactions. One of the applications in IoT is smart energy management where the objective is to optimize energy usage in smart homes or buildings based on IoT sensor data. The entropy-SHAP hybrid technique highlights features like past energy consumption, occupancy sensors, weather data, or appliance usage that predict energy needs and reduce uncertainty about demand patterns. "Past consumption" might dominate entropy reduction, showing its reliability. Fairness-aware scoring prevents biased energy allocation (e.g., favoring larger homes or wealthier users). Adjust weights if "home size" or "income proxy" skews energy savings recommendations. Another application could be anomaly detection in IoT networks where the aim is to detect unusual behavior in IoT devices (e.g., security breaches, malfunctions). The entropy-SHAP hybrid technique identifies features like data packet rates, connection frequency, or sensor readings that predict anomalies and reduce uncertainty about normal behavior. "Packet rates" might have high entropy reduction, clarifying typical vs. anomalous patterns. Fairness-aware scoring avoids over-flagging devices in certain areas or user groups (e.g., low-bandwidth regions). Adjust weights if "location" parameter biases anomaly detection unfairly.

### END-TO-END WORKING EXAMPLES

Example 1: Loan approval prediction. At step 202, input data is received from various sources such as customer data, bank data etc. At step 204, the features extracted from input data include [ Income (continuous variable), Credit Score (continuous variable), Gender (categorical variable); Target: Loan Approved (1 = yes, 0 = no)]. Sensitive attribute in the input data is Gender (Male, Female). At step 206, parameters such as binned income is derived by performing discretization. Income is binned into 3 ranges (Low: <50K, Medium: 50K-100K, High: >100K) using entropy-based splits. Another parameter is derived by multiplying income and credit score to capture combined effects. Suppose one of the data instances is [Income is 75K, hence binned into Medium (0.5), Credit Score = 700 (normalized to 0.7), Gender = Female (0)], then, corresponding profile vector is P = [0.5, 0.7, 0]. At step 208, a model fit vector is generated by firstly calculating entropy using techniques such as Shannon entropy. Considering probability of low is 0.4, Medium is 0.4, and High is 0.2, the entropy H is ≈ 1.52 bits. Entropy of the target variable (Loan Approved) is 0.97 bits (assuming 50% of the loans are approved, 50% not). SHAP values of the parameters are: *φ*(*Binned Income*) = 0.4, *φ*(*Credit Score*) = 0.3, *φ*(*Income* × *Credit*) *=* 0.25, *φ*(*Gender*) = 0.15. The updated weights based on SHAP values are: ${w}_{Binned Income}^{adjusted} \approx 0.476 , {w}_{Credit Score}^{adjusted} \approx 0.345 , {w}_{Income \times Credit}^{adjusted} \approx 0.2875 , {w}_{Gender}^{adjusted} \approx 0.165$ . Suppose 60% of approved loans are from male applicants and 40% of approved loans are from female applicants. Fairness metric SPD is calculated as 0.6 - 0.4 = 0.2. Suppose the threshold value is |SPD| < 0.1, then, a bias is detected, and source of bias is the gender parameter. Hence, weight of this parameter has to be reduced in the model fit vector. Assuming β = 0.5, ${w}_{Gender}^{adjusted}$ is reduced to 0.0825. Thus, the resulting model fit vector obtained after normalizing the weights to 1 is M = [0.51, 0.39, 0.10]. Machine learning model is trained using the features. The base score of the model is calculated as cosine similarity between the profile vector and the model fit vector. First dot product is calculated as *P* · *M* = (0.5 × 0.51) + (0.7 × 0.39) + (0 × 0.10) = 0.528. Magnitudes of the profile vector and the model fit vector are: $\left|P\right| = \sqrt{\left({0.5}^{2}+{0.7}^{2}+{0}^{2}\right)} \approx 0.86$ and $\left|M\right| = \sqrt{\left({0.51}^{2}+{0.39}^{2}+{0.10}^{2}\right)} \approx 0.65$. The base score is 0.528 / (0.86 × 0.65) ≈ 0.945. A score of 0.945 suggests this data instance aligns well with the model's optimal feature importance, indicating a high likelihood of loan approval.

Example 2: Job Applicant Suitability Prediction. Goal is to predict if an applicant is suitable (1 = yes, 0 = no) for a software engineering role. Suppose input data received at step 202 is details of 5 applicants as given in table 1.

**Table 1**

| **Applicant ID** | **Years of experience** | **Coding score** | **Education level** | **Gender** | **Suitability (target)** |
|---|---|---|---|---|---|
| 1 | 5 | 85 | Bachelor's | Male | 1 |
| 2 | 7 | 70 | Master's | Female | 0 |
| 3 | 7 | 90 | Bachelor's | Male | 1 |
| 4 | 3 | 75 | Master's | Female | 1 |
| 5 | 4 | 80 | Bachelor's | Male | 0 |

The sensitive attribute among the features is gender. In order to provide equal opportunity, a company desires fairness metric to be < 0.1. Raw features extracted at step 204 are Years Experience (continuous), Coding Score (continuous), Education Level (categorical), Gender (categorical). At step 206, parameters such as binned years of experience is derived by performing discretization. Years of experience: Low (<3), Medium (3-5), High (>5). Entropy of target feature is 0.971 since P(Y=1) = 3/5 = 0.6, and P(Y=0) = 2/5 = 0.4. P(Low) = 0.4, P(Medium) = 0.4, P(High) = 0.2, therefore entropy of binned years of experience is 1.522. SHAP values are determined, and the entropy-based weights are updated. Since gender parameter introduces bias, its weights are reduced. Machine learning model is trained using the features and updated weights.

Example 3: optimizing network resource allocation and customer support in telecommunications. A telecommunications company aims to enhance network performance and customer support responsiveness while ensuring fairness across demographic groups (urban vs. rural, income levels). Four machine learning models address distinct functions: i) Model 1: Bandwidth Allocation - Predicts optimal bandwidth distribution, ii) Model 2: Signal Strength Optimization - Adjusts signal strength to minimize issues, iii) Model 3: Customer Support Prioritization - Prioritizes support tickets, and iv) Model 4: Network Load Balancing - Balances server load to prevent outages. Each model specializes in a unique aspect. The models are scalable, i.e., each model can be updated independently (e.g., server upgrades affect only Model 4). At step 202, input data is received from a telecommunication network and at step 204 a plurality of features are extracted from the input data. Table 2 gives a sample of features extracted for 5 customers.

**Table 2**

| **ID** | **Location** | **Inco me Level** | **Data (GB )** | **Calls per Day** | **Tick ets** | **Band width (Mbps )** | **Signal (dBm )** | **Ser ver Loa d (%)** | **Targe t varia ble (Mod el-Specif ic)** |
|---|---|---|---|---|---|---|---|---|---|
| 1 | Urban | High | 20 | 5 | 1 | 50 | -70 | 70 | 60 (M1), -5 (M2), 80 (M3), 25 (M4) |
| 2 | Rural | Low | 5 | 2 | 2 | 20 | -90 | 60 | 25 (M1), 10 (M2), 90 (M3), 20 (M4) |
| 3 | Urban | Medi um | 15 | 4 | 0 | 40 | -75 | 80 | 45 (M1), 0 (M2), 50 (M3), 30 (M4) |
| 4 | Rural | Medi um | 10 | 3 | 1 | 30 | -85 | 65 | 35 (M1), 5 (M2), 70 (M3), 25 (M4) |
| 5 | Urban | High | 25 | 6 | 0 | 55 | -65 | 75 | 60 (M1), -10 (M2), 40 (M3), 28 (M4) |

In the given data, Location (Urban/Rural) and Income Level are sensitive attributes. Features and parameters are Data Consumption, Calls/Day, Tickets, Location, Income Level. Target variable varies by model (e.g., Bandwidth in Mbps for Model 1). Each model is trained with relevant features and targets, integrating entropy-SHAP (E-SHAP) hybrid technique for feature importance.

### Model 1: Bandwidth Allocation

- Features: Data Consumption, Location, Income Level.
- Target: Optimal Bandwidth (Mbps).
- Algorithm: Gradient Boosting.
- Training: 80% train, 20% validation; optimize RMSE.
- E-SHAP:
   ∘ SHAP: *ϕ_{Data}=* 0.5, *ϕ_{Location}=* 0.3, *ϕ_{Income}=* 0.2
   ∘ Entropy: H(Bandwidth)=1.5, IG(Data)=0.4, IG(Location)=0., *IG*(Income)=0.15.
   ∘ Adjusted (α=0.): ${w}_{Data}^{adjusted} = 0.5 ⋅ \left(1+0.5⋅0.267\right) = 0.567$ ${w}_{Location}^{adjusted} = 0.3 ⋅ \left(1+0.5⋅0.167\right) = 0.35$ ${w}_{Income}^{adjusted} = 0.2 ⋅ \left(1+0.5⋅0.1\right) = 0.225$

### Model 2: Signal Strength Optimization

- Features: Calls/Day, Location, Income Level.
- Target: Signal Adjustment (dBm).
- Algorithm: Random Forest.
- Training: Optimize MAE.
- E-SHAP:
   ∘ SHAP: *ϕ_{Calls}=* 0.4, *ϕ_{Location}=* 0.35, *ϕ_{Income}=* 0.15
   ∘ Entropy: *IG*(Calls)=0.3, *IG*(Location)=0.2, *IG*(Income)=0.1.
   ∘ Adjusted: ${w}_{Calls}^{adjusted} = 0.4 ⋅ \left(1+0.5⋅0.2\right) = 0.46$ ${w}_{Location}^{adjusted} = 0.35 ⋅ \left(1+0.5⋅0.133\right) = 0.385$ ${w}_{Income}^{adjusted} = 0.15 ⋅ \left(1+0.5⋅0.067\right) = 0.165$

### Model 3: Customer Support Prioritization

- Features: Tickets, Calls/Day, Location.
- Target: Priority Score (0-100).
- Algorithm: XGBoost.
- Training: Optimize accuracy.
- E-SHAP:
   ∘ SHAP: *ϕ_{Tickets}=*0.45*, ϕ_{Calls}=*0.3*, ϕ_{Location}=*0.25*.*
   ∘ Entropy: *IG*(Tickets)=0.35, *IG*(Calls)=0.2, *IG*(Location)=0.15.
   ∘ Adjusted: ${w}_{Tickets}^{adjusted} = 0.45 ⋅ \left(1+0.5⋅0.233\right) = 0.518$ ${w}_{Calls}^{adjusted} = 0.3 ⋅ \left(1+0.5⋅0.133\right) = 0.33$ ${w}_{Location}^{adjusted} = 0.25 ⋅ \left(1+0.5⋅0.1\right) = 0.269$
   **n.b.** IG = Information Gain. It is a metric used in information theory and ML to quantify how much entropy about a target variable is reduced by knowing the value of the feature. $IG \left(X, Y\right) = H \left(Y\right) - H \left(\left.Y\right|X\right)$
   *H*(*Y*) *= Entropy of the target variable Y*
   *H*(*Y*|*X*) *= Conditional entropy of Y given feature X*
   *IG*(*X, Y*) *= Reduction in Uncertainty about Y due to X.*

### Model 4: Network Load Balancing

- Features: Server Load, Data Consumption, Location.
- Target: Load Distribution (%).
- Algorithm: Linear Regression.
- Training: Optimize MSE.
- E-SHAP:
   ∘ *ϕ_{Server Load}=*0.5*, ϕ_{Data}=*0.3*, ϕ_{Location}=*0.2*.*
   ∘ Entropy: *IG*(Server Load)=0.4, *IG*(Data)=0.25, *IG*(Location)=0.15.
   ∘ Adjusted: ${w}_{Server Load}^{adjusted} = 0.5 ⋅ \left(1+0.5⋅0.267\right) = 0.57$ ${w}_{Data}^{adjusted} = 0.3 ⋅ \left(1+0.5⋅0.167\right) = 0.3375$${w}_{Location}^{adjusted} = 0.2 ⋅ \left(1+0.5⋅0.1\right) = 0.215$

Fairness metric used for assessing fairness of the trained models is Statistical Parity Difference (SPD) calculated according to equation 7. $SPD = P \left(\left.{ϒ}^{⌣}>threshold\right|Urban\right) - P \left(\left.{ϒ}^{⌣}>threshold\right|Rural\right.$ Thresholds are predefined and model-specific (e.g., 40 Mbps for Model 1).

### Initial Results:

∘ Model 1: Urban: 3/3 > 40 Mbps (100%), Rural: 1/2 (50%), SPD=0.5>0.1 SPD = 0.5 > 0.1 SPD=0.5>0.1.
∘ Model 2: Urban: 2/3 adjust < 0 dBm (66.7%), Rural: 2/2 > 0 dBm (100%), SPD=-0.333>0.1 SPD = -0.333 > 0.1 SPD=-0.333>0.1.
∘ Model 3: Urban: 2/3 > 60 (66.7%), Rural: 2/2 (100%), SPD=-0.333>0.1 SPD = - 0.333 > 0.1 SPD=-0.333>0.1.
∘ Model 4: Urban: 3/3 balanced (100%), Rural: 1/2 (50%), SPD=0.5>0.1 SPD = 0.5 > 0.1 SPD=0.5>0.1.

### Conclusion: All models exhibit bias favoring urban areas.

Bias is determined according to equation 8. For model 1, bias is 0.7 and for the remaining models it is 0.5. Considering *β*=0.5, the weights are updated as ${w}_{Location}^{final} = 0.35 ⋅ \left(1-0.5⋅1.0\right) = 0.175$ for model 1, ${w}_{Location}^{final} = 0.385 ⋅ \left(1-0.5⋅1.0\right) = 0.1925$ for model 2, ${w}_{Location}^{final} = 0.269 ⋅ \left(1-0.5⋅1.0\right) = 0.1345$ for model 3 and ${w}_{Location}^{final} = 0.215 ⋅ \left(1-0.5⋅1.0\right) = 0.1075$ for model 4. The weights of remaining features are adjusted accordingly. Hence final set of weights are: *Ψ_{Data}*=0.486/0.486=1.0, *Ψ_{Location}=*0.36*, Ψ_{Income}*=0.438 for model 1, *Ψ_{Calls}=*1.0*, Ψ_{Location}=*0.42*, Ψ_{Income}=*0.36 for model 2, *Ψ_{Tickets}=*1.0*, Ψ_{Calls}*=0.637, *Ψ_{Location}=*0.26 for model 3 and *Ψ_{Server Load}=*1.0, *Ψ_{Data}=*0.592*, Ψ_{Location}=*0.189 for model 4. The models are retrained using features with the final set of weights and the weights are adjusted iteratively until |SPD|<0.1. ${Bias}_{Location} = \left|Corr\left(Location, {ϒ}^{⌣}\right)\right|$

Hysteresis thresholds defined for various models are: i) Model 1: Active if data demand > 20 GB/month, off < 15 GB/month, ii) Model 2: Signal issues > 10% calls dropped, off < 5%, iii) Model 3: Ticket backlog > 5, off < 3 and iv) Model 4: Server load > 80%, off < 60%. Suppose server load is 85%, then, model 4 is activated. If server load drops to 70%, then, system continues using Model 4 until the server load is < 60%, then switches to Model 1. This ensures stable transitions between models based on network conditions.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, non-volatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method (200) comprising:
receiving (202), via one or more hardware processors, input data from one or more sources;
extracting (204), via the one or more hardware processors, a plurality of features from the input data;
deriving (206), via the one or more hardware processors, a plurality of parameters based on the plurality of features, wherein the plurality of features and the plurality of parameters comprise a profile vector;
generating (208), via the one or more hardware processors, a model fit vector comprising the plurality of parameters and associated plurality of weights by:
initializing (208A) the plurality of weights associated with the plurality of parameters based on an entropy of one or more features, from among the plurality of features, that are used to derive the plurality of parameters;
updating (208B) the plurality of weights associated with the plurality of parameters using SHAP (SHapley Additive exPlanations) values;
calculating (208C) a fairness metric for each of the plurality of parameters;
determining (208D) one or more parameters that introduce bias based on the fairness metric, from among the plurality of parameters; and
reducing (208E) the plurality of weights associated with the one or more parameters that introduce bias;
training (210), via the one or more hardware processors, a plurality of machine learning models using the plurality of parameters having an associated weight greater than a first predefined threshold;
determining (212), via the one or more hardware processors, a model score associated with each of the plurality of machine learning models as a weighted combination of a base score, a performance score, an adaptability score, an accuracy score, and a fairness score, wherein,
the base score is a cosine similarity between the profile vector and the model fit vector,
the performance score is a historical accuracy of the trained machine learning model,
the adaptability score is a model adaptation rate,
the accuracy score is a current accuracy of the trained machine learning model, and
the fairness score represents bias of the trained machine learning model; and
selecting (214), via the one or more hardware processors, one or more models from among the plurality of trained machine learning models having the associated model score greater than a second predefined threshold.

2. The method as claimed in claim 1, wherein the model adaptation rate is measured as *α* × Δ*S* + *β* × *D*(*X*) + *γ* × Δ*performance,* wherein *ΔS* is similarity change, *D*(*X*) is feature drift, and *Δperformance* is accuracy decay of the trained machine learning model over a period of time.

3. The method as claimed in claim 1, comprises:
retraining the plurality of machine learning models when new input data is received to obtain a plurality of retrained machine learning models;
selecting one or more retrained models from among the plurality of retrained machine learning models based on associated model score; and
switching to the one or more retrained models from the one or more models selected previously using a hysteresis based thresholding technique.

4. A system (100), comprising:
a memory (102) storing instructions;
one or more Input/Output (I/O) interfaces (106); and
one or more hardware processors (104) coupled to the memory (102) via the one or more communication interfaces (106), wherein the one or more hardware processors (104) are configured by the instructions to:
receive input data from one or more sources;
extract a plurality of features from the input data;
derive a plurality of parameters based on the plurality of features, wherein the plurality of features and the plurality of parameters comprise a profile vector;
generate a model fit vector comprising the plurality of parameters and associated plurality of weights by:
initializing the plurality of weights associated with the plurality of parameters based on an entropy of one or more features, from among the plurality of features, that are used to derive the plurality of parameters;
updating the plurality of weights associated with the plurality of parameters using SHAP (SHapley Additive exPlanations) values;
calculating a fairness metric for each of the plurality of parameters;
determining one or more parameters that introduce bias based on the fairness metric, from among the plurality of parameters; and
reducing the plurality of weights associated with the one or more parameters that introduce bias;
train a plurality of machine learning models using the plurality of parameters having an associated weight greater than a first predefined threshold;
determine a model score associated with each of the plurality of machine learning models as a weighted combination of a base score, a performance score, an adaptability score, an accuracy score, and a fairness score, wherein,
the base score is a cosine similarity between the profile vector and the model fit vector,
the performance score is a historical accuracy of the trained machine learning model,
the adaptability score is a model adaptation rate,
the accuracy score is a current accuracy of the trained machine learning model, and
the fairness score represents bias of the trained machine learning model; and
select one or more models from among the plurality of trained machine learning models having the associated model score greater than a second predefined threshold.

5. The system as claimed in claim 4, wherein the model adaptation rate is measured as *α* × Δ*S* + *β* × *D*(*X*) + *γ* × Δ*performance,* wherein *ΔS* is similarity change, *D*(*X*) is feature drift, and *Δperformance* is accuracy decay of the trained machine learning model over a period of time.

6. The system as claimed in claim 4, wherein the one or more hardware processors are configured to:
retraining the plurality of machine learning models when new input data is received to obtain a plurality of retrained machine learning models;
selecting one or more retrained models from among the plurality of retrained machine learning models based on associated model score; and
switching to the one or more retrained models from the one or more models selected previously using a hysteresis based thresholding technique.

7. One or more non-transitory machine-readable information storage mediums comprising one or more instructions which when executed by one or more hardware processors cause:
receiving input data from one or more sources;
extracting a plurality of features from the input data;
deriving a plurality of parameters based on the plurality of features, wherein the plurality of features and the plurality of parameters comprise a profile vector;
generating a model fit vector comprising the plurality of parameters and associated plurality of weights by:
initializing the plurality of weights associated with the plurality of parameters based on an entropy of one or more features, from among the plurality of features, that are used to derive the plurality of parameters;
updating the plurality of weights associated with the plurality of parameters using SHAP (SHapley Additive exPlanations) values;
calculating a fairness metric for each of the plurality of parameters;
determining one or more parameters that introduce bias based on the fairness metric, from among the plurality of parameters; and
reducing the plurality of weights associated with the one or more parameters that introduce bias;
training a plurality of machine learning models using the plurality of parameters having an associated weight greater than a first predefined threshold;
determining a model score associated with each of the plurality of machine learning models as a weighted combination of a base score, a performance score, an adaptability score, an accuracy score, and a fairness score, wherein,
the base score is a cosine similarity between the profile vector and the model fit vector,
the performance score is a historical accuracy of the trained machine learning model,
the adaptability score is a model adaptation rate,
the accuracy score is a current accuracy of the trained machine learning model, and
the fairness score represents bias of the trained machine learning model; and
selecting one or more models from among the plurality of trained machine learning models having the associated model score greater than a second predefined threshold.

8. The one or more non-transitory machine readable information storage mediums as claimed in claim 7, wherein the model adaptation rate is measured as *α* × Δ*S + β* × *D*(*X*) *+ γ* × Δ*performance,* wherein *ΔS* is similarity change, *D*(*X*) is feature drift, and *Δperformance* is accuracy decay of the trained machine learning model over a period of time.

9. The one or more non-transitory machine readable information storage mediums as claimed in claim 7, comprises:
retraining the plurality of machine learning models when new input data is received to obtain a plurality of retrained machine learning models;
selecting one or more retrained models from among the plurality of retrained machine learning models based on associated model score; and
switching to the one or more retrained models from the one or more models selected previously using a hysteresis based thresholding technique.
